# EUROPÄISCHE PATENTSCHRIFT

(11) **EP 0 525 435 B1**
(45) Veröffentlichungstag und Bekanntmachung des Hinweises auf die Patenterteilung: **29.05.1996**
(21) Anmeldenummer: 92111250.4
(22) Anmeldetag: 02.07.1992
(51) Int. Cl.: B62D 33/06, F16F 1/38

(54) **Gummilager für die Lagerung des Fahrerhauses eines Nutzfahrzeuges**
Rubber bearing for suspension of the driver cab of a truck
Support en caoutchouc pour la suspension de la cabine d'un véhicule utilitaire

(30) Priorität: 27.07.1991 DE 4124934; 23.05.1992 DE 4217218
(43) Veröffentlichungstag der Anmeldung: 03.02.1993
(73) Patentinhaber: Iveco Magirus Aktiengesellschaft, D-89017 Ulm (DE)
(72) Erfinder: Diepold, Klaus-Dieter, W-7900 Ulm (DE)
(74) Vertreter: TER MEER - MÜLLER - STEINMEISTER & PARTNER

(56) Entgegenhaltungen:
- EP-A- 0 122 513
- EP-A- 0 188 824
- EP-A- 0 318 438
- EP-A- 0 429 757
- DE-A- 2 229 436
- GB-A- 2 010 438
- GB-A- 2 018 948
- PATENT ABSTRACTS OF JAPAN vol. 006, no. 267 (M-182)25. Dezember 1982 & JP-A-57 158 167 (HINO JIDOSHA)

## Beschreibung

Die Erfindung betrifft ein Gummilager für die Lagerung des Fahrerhauses eines Nutzfahrzeuges gemäß dem Obergriff des unabhängigen Anspruchs 1.

Aus DE-A 36 01 506 ist ein Gummilager für die Fahrerhauslagerung eines Nutzfahrzeuges der vorgenannten Art bekannt, bei dem zwei Gummiringe komplizierter Konfiguration vorgesehen sind, um unterschiedliche Federelastizitäten eines kombinierten Radial-/Gleitlagers einzurichten. Für ein kippbares Fahrerhaus eines Lastkraftwagens ist das bekannte elastische Lager weniger geeignet, da während Reparatur- oder Wartungsarbeiten bei gekipptem Fahrerhaus größere Kräfte im Lager übertragen werden müssen als bei nicht gekipptem Fahrerhaus im Fahrbetrieb des Fahrzeugs. Diese Kräfte erfordern, daß das Lager insgesamt stärker als für den Fahrbetrieb erforderlich dimensioniert werden muß.

Nach dem Stand der Technik wird grundsätzlich das kippbare Fahrerhaus eines Lastkraftwagens entweder über Gummielemente, die ein begrenztes Federn des Fahrerhauses im Fahrbetrieb ermöglichen direkt oder über in Gummibuchsen gelagerte Hebel, die in Verbindung mit Federelementen eine komfortable Fahrerhausfederung zulassen, am Fahrgestell aufgehängt. In beiden Fällen haben die Gummielemente die Aufgabe, das Fahrerhaus akustisch vom Fahrgestell abzukoppeln und dadurch die Geräuschübertragung vom Fahrgestell zum Fahrerhaus zu reduzieren. Zusätzlich ermöglichen die Gummielemente je nach Auslegung ein begrenztes Federn des Fahrerhauses senkrecht zur vertikalen Hauptfederrichtung der Federelemente, also in Fahrzeuglängs- und -querrichtung und dadurch eine Abkopplung des Fahrerhauses von horizontalen und longitudinalen Fahrgestellschwingungen.

Die vorgenannten Anforderungen erfordern Gummielemente mit weicher Federcharakteristik. Maßgeblich für die Auslegung sind darüber hinaus im Hinblick auf die von den Gummielementen ertragbaren Belastungen die maximal auftretenden Lagerkräfte. Da beim Kippen des Fahrerhauses zu Wartungs- und Reparaturarbeiten an den vorderen Fahrerhauslagern erheblich höhere Kräfte auftreten als im Fahrbetrieb, müssen diese Kräfte für die Auslegung der Gummielemente zugrundegelegt werden. Dies hat zur Folge, daß die Gummielemente für den Fahrbetrieb hinsichtlich des Gummivolumens überdimensioniert bzw. bei Nichtvorhandensein des dafür benötigten Einbauraums für den Fahrbetrieb zu hart ausgelegt werden müssen.

Ausgehend vom vorgenannten Stand der Technik ist es Aufgabe der Erfindung, ein Gummilager der eingangs genannten Art derart weiterzubilden, daß es bei einfachem und kompaktem Aufbau insbesondere für die Lagerung von kippbaren Fahrerhäusern von Nutzfahrzeugen geeignet ist, ohne Lesonders "erschleißanfällig zu sein.

Gelöst wird die der Erfindung zugrundeliegende Aufgabe durch die im kennzeichnenden Teil des Anspruchs 1 angegebenen Merkmale.

Vorteilhaft weitergebildet wird der Erfindungsgegenstand durch die Merkmale der Unteransprüche 2 bis 13.

Wesen der Erfindung ist die Ausbildung zumindest eines radialen Endanschlags zwischen Außenhülse und Innenhülse des Gummilagers, wobei die Außenhülse nach Überschreitung eines frei wählbaren Federweges in direkte Anlage an die Innenhülse bringbar ist. Das Gummilager besteht aus wenigen einfach geformten Teilen, wobei Außen- und Innenhülse metallene oder Kunststoff-Formteile sein können, in welche der radiale Endanschlag unmittelbar oder als zusätzliches Bauteil integriert ist. Der radiale Endanschlag ist insbesondere so dimensioniert, daß er nach Überschreiten der im normalen Fahrbetrieb überwiegend auftretenden Kräfte in Eingriff kommt. Kräfte, die größer sind, werden dadurch über diesen Endanschlag übertragen. Durch den Endanschlag kann das Gummielement hinsichtlich Gummivolumen, Einbauraum und Federcharakteristik unter ausschließlicher Berücksichtigung der im Fahrbetrieb auftretenden Kräfte ausgelegt werden. Das Gummielement kann daher mit einer weichen Federcharakteristik und kleiner ausgeführt werden, ohne einem übermäßigem Verschleiß zu unterliegen, bzw. bei einem Kippen des Fahrerhauses beschädigt zu werden.

Gummilager sind beispielsweise auch aus EP-A-0 188 824 sowie EP-A-0 429 757 bekannt. Diese betreffen jedoch nicht die Lagerung eines Fahrerhauses in einem Nutzfahrzeug zwecks Aufhängung des Fahrerhauses auf dem Fahrzeugrahmen, vielmehr die Lagerung zwischen Kippzylinder bzw. Kolbenstangen des Kippzylinders und Fahrerhauskabine, um einen metallischen Kontakt zwischen den Teilen zwecks Geräuschminderung bei einem Neigen der Fahrerhauskabine zu vermeiden. Letztgenannte Lagerung ist mit der erfindungsgemäßen Lagerung gattungsgemäß nicht vergleichbar, da letztgenanntes Lager aufgrund seiner konstruktiven Ausbildung keine tragende Funktion hat und nur sehr kleine Radialkräfte übertragen kann. Es sind dies die im Fahrerhauskippzylinder auftretenden hydraulischen Dämpfungskräfte beim Schwingen desselben in seinem Freihubbereich, hervorgerufen durch die Ein- und Ausfederbewegung des Fahrerhauses. Demgegenüber kann das erfindungsgemäße Gummilager aufgrund seiner konstruktiven Ausbildung durch das zwischen einer äußeren und inneren Ummantelung aus Metall oder Kunststoff eingeschlossene Gummielement und der Möglichkeit, dieses Gummielement beim Einbau des Lagers, z.B. durch eine geschlitzte Außenbuchse, vorzuspannen, wesentlich höhere Betriebskräfte (hier: die Fahrerhausgewichtskraft) übertragen. Das erfindungsgemäße Gummilager ist daher ein lasttragendes Lager im engeren Sinn.
Vergleichbar sind beide Lagertypen auch deshalb nicht, weil das bekannte Fahrerhauskippzylinderlager bei Verdrehung des Bolzens relativ zum Lagersitz (Zweck des Lagers) zunächst den Gummiring molekular verformt und anschließend nach Überwindung des Losbrechmomentes eine Gleitbewegung direkt in der Kontaktfläche zwischen Bolzen und Gummiring stattfindet. Diese Gleitbewegung wird durch die Reibung zwischen Gummiring und Bolzen behindert.

Demgegenüber findet beim erfindungsgemäßen Lager die Drehbewegung des Bolzens sofort als Gleitbewegung zwischen der Innenhülse des Gummilagers, welche als Gleitlager ausgebildet ist, und dem Bolzen statt. Dabei treten je nach verwendetem Material für das Gleitlager nur sehr geringe Reibungskräfte auf. Das Lager spricht daher sehr feinfühlig auf Drehbewegungen zwischen Lagerbolzen und Lagersitz an.

Beide vorgenannten Lagertypen sind auch deshalb nicht vergleichbar, da das bekannte Lager keine Axialkräfte übertragen kann bzw. zur Übertragung dieser zusätzliche Scheiben zwischen dem Lagersitz des Gummiringes und dem Lagersitz des Bolzens benötigt. Das Lager ist dann jedoch axial "starr".

Das erfindungsgemäße Gummilager demgegenüber kann über die im Lagersitz des Gummilagers eingepreßte Außenhülse des Gummilagers und des einvulkanisierte Gummielement Kräfte vom Lagersitz des Gummilagers auf die Lagerinnenhülse und von dort auf den Lagersitz des Lagerbolzens übertragen. Das Lager ist daher ein kombiniertes Radial- und Axiallager. Je nach Ausbildung des Gummielementes kann eine weiche axiale Charakteristik erzielt werden. Das Gummielement wird dabei auf Schub beansprucht.

Beide Lagertypen unterscheiden sich schon deshalb, da beim bekannten Lager große Radialkräfte direkt vom Bolzen auf den Lagersitz der Gummiringe übertragen werden, und zwar Stahl auf Stahl. Drehbewegungen des Bolzens finden dann direkt in der Kontaktfläche zwischen Bolzen und dem Lagersitz der Gummielemente statt. Ein derartiges Lager ist im Hinblick auf Komfort und entstehende Geräusche als im Fahrbetrieb aktives Lager nicht geeignet.

Beim erfindungsgemäßen Lager werden im Gegensatz hierzu die großen Radialkräfte über den radialen Endanschlag, der im Falle seiner Ausbildung aus Kunststoff eine Federcharakteristik haben kann, auf die Außenhülse des Lagers und von dort auf den Lagersitz übertragen. Eine Drehbewegung des Lagerbolzens findet dabei unverändert in der Gleitfläche zwischen Bolzen und Lagerinnenhülse statt. Es tritt daher in der relativ kleinen Kontaktfläche zwischen Endanschlag und Lageraußenhülse und der dort vorhandenen hohen Flächenpressung keine Relativbewegung und dadurch kein Verschleiß durch Abrieb auf.

Im übrigen dient das bekannte Lager, wie schon gesagt, zur Lagerung des Fahrerhauskippzylinders am Fahrerhaus und am Fahrgestell. Demgegenüber dient das erfindungsgemäße Gummilager zur Aufhängung des Fahrerhauses am Fahrgestell selbst, hat also auch einen vollkommen andersartigen Einsatzzweck. Darüber hinaus besteht das bekannte Lager aus zwei zwischen Bolzen und Lagergehäuse eingebauten losen Gummiringen. Demgegenüber ist das erfindungsgemäße Gummilager mit einer Außen- und Innenhülse mit Gleitlagerfunktion und einer dazwischen einvulkanisierten bzw. eingepreßten Gummischicht sowie einem zwischen Außen- und Innenhülse angeordneten Endanschlag ausgestattet und wird in seinen Lagersitz eingepreßt.

Die Erfindung wird nachfolgend anhand von Ausführungsbeispielen unter Bezugnahme auf die beigefügte Zeichnung näher erläutert; es zeigen:
- Fig. 1: eine schematische Seitenansicht eines kippbaren Fahrerhauses mit schematischer Darstellung von zwei Gummilagern,
- Fig. 2 und 3: eine Ausführungsvariante eines Gummilagers nach Fig. 1 in einem schematischen Axialschnitt bzw. in einer Stirnansicht,
- Fig. 4 und 5: eine zweite Ausführungsvariante eines Gummilacers nach Fig. 1 in einem Axialschnitt bzw. in einer Stirnansicht entsprechend den Fig. 2 und 3,
- Fig. 6: eine Ausführungsform ähnlich Fig. 2 mit axial geteilten separaten zentralen Endanschlägen zwischen äußeren Gummielementen,
- Fig. 7: einen Schnitt A-A der Fig. 6,
- Fig. 8: einen Schnitt C-C der Fig. 6,
- Fig. 9: einen Schnitt C-C einer anderen Ausführungsvariante, bei der der zentrale Endanschlag nur in einer Hauptbelastungsrichtung wirkt, nämlich in der vertikalen,
- Fig. 10: eine andere Ausführungsvariante ähnlich Fig. 4,
- Fig. 11: einen Schnitt D-D der Fig. 10,
- Fig. 12: einen Schnitt E-E der Fig. 11,
- Fig. 13, 14 und 15: Schnitte ähnlich den Fig. 10, 11 und 12 einer anderen Ausführungsvariante, und
- Fig. 16, 17 und 18: Schnitte einer weiteren Ausführungsvariante ähnlich den Fig. 10, 11 und 12.

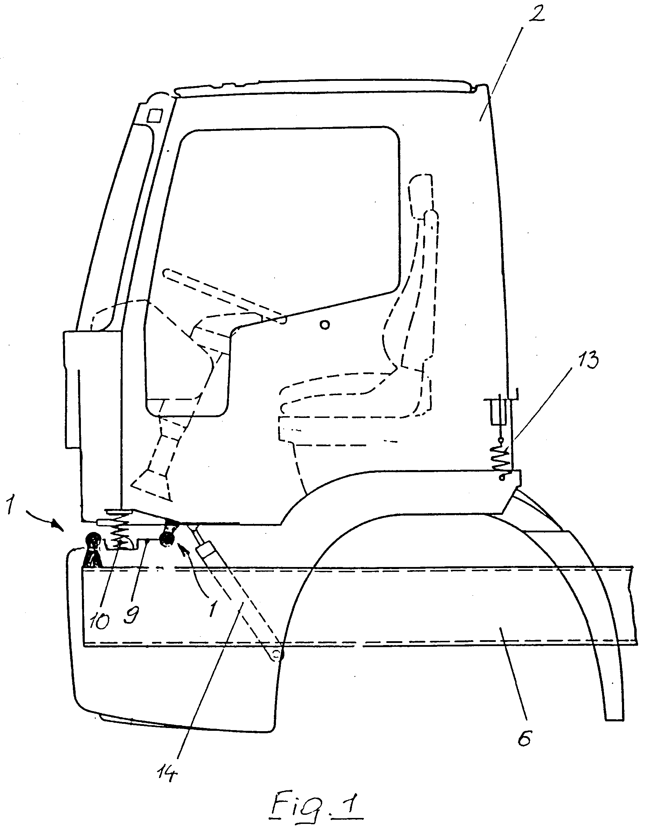

In Fig. 1 ist schematisch der vordere Teil eines Nutzfahrzeuges mit einem kippbaren Fahrerhaus (2) in schematischer Seitenansicht gezeigt. Das Fahrerhaus (2) weist hintere Federn (13) und vordere Fahrerhausfedern (10) auf, wobei die beiden vorderen Fahrerhausfedern (10) seitlich vorne zwischen der Unterseite des Fahrerhauses und einer Schwinge (9) abgestützt sind, die das untere Ende der Fahrerhausfeder (10) aufnimmt.

Jede der Schwingen (9) weist an vorderer und hinterer Stelle ein Gummilager (1) auf. Hierbei sind die vorderen gemäß Fig. 1 linken Gumilager (1) gleichzeitig die Kippachse des Fahrerhauses (2), welches durch einen Kippzylinder (14) nach vorne, d.h. gemäß Fig. 1 im Gegenuhrzeigersinn um die Kippachse hochgekippt werden kann. Durch die beiden Gummilager (1) ist mithin die Schwinge (9) um das vordere Gummilager (1) drehbar ausgebildet. Im gekippten Zustand des Fahrerhauses (2) werden ersichtlich die Gummilager (1) stärker beansprucht als im nichtgekippten Zustand bzw. während einer Fahrt des Fahrzeugs, bei der das Fahrerhaus zusätzlich auf den hinteren Fahrerhausfedern aufliegt.

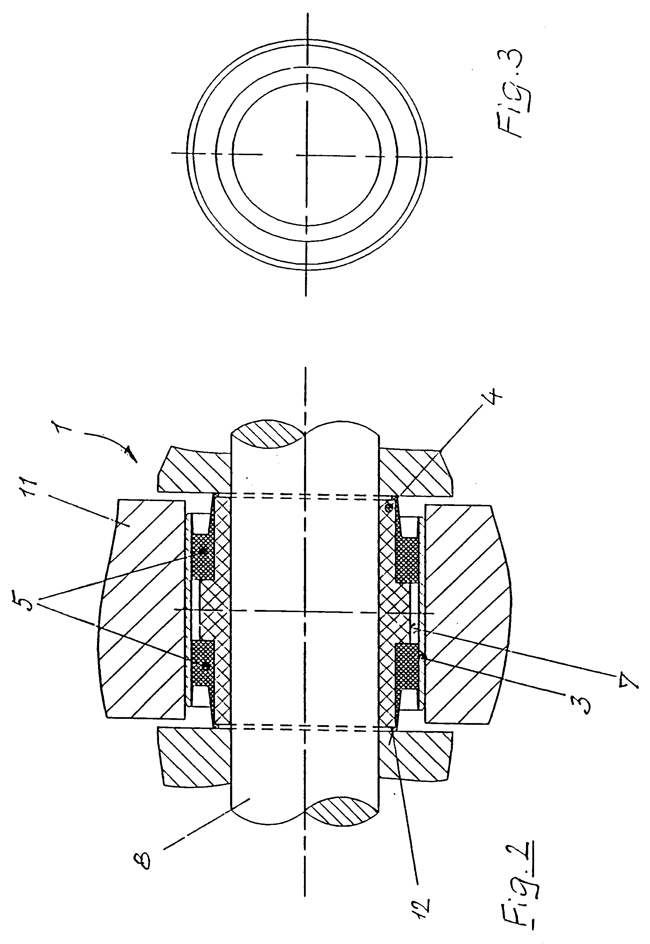

Eine Ausführungsvariante des Gummilagers (1) ist in einem Axialschnitt und in einer Stirnansicht in den Fig. 2 und 3 gezeigt. Das Gummilager (1) umfaßt eine metallene ringförmige Außenhülse (3), eine Innenhülse (4) aus Metall oder Kunststoff oder einer Kombination aus beiden sowie zwei axial voneinander beabstandete zwischen Außenhülse (3) und Innenhülse (4) gelegene Gummielemente (5).

Beide Gummielemente (5) sind in radial äußeren Umfangsaussparungen der Innenhülse (4) kraft- oder formschlüssig aufgenommen, wobei beide Gummielemente (5) sowohl bezüglich der Außenhülse (3) als auch der Innenhülse (4) fest haftend einvulkanisiert sein können.

Die Außenhülse (3) ist in ein Aufnahmeauge (11) des Fahrzeugrahmens (6) bzw. der Fahrerhausunterseite eingepreßt (vgl. linkes und rechtes Gummilager (1) der Fig. 1).

Die radial innere Umfangsfläche der Innenhülse (4) ist als Gleitfläche für einen um seine Längsachse drehbaren Lagerbolzen (8) ausgebildet, welcher an der Schwinge (9) gemäß Fig.1 angelenkt ist.

Die Innenhülse (4) weist an axial äußeren Stellen zusätzliche radiale Gleitflächen (12) auf, so daß das Gummilager (1) insgesamt als kombiniertes Radial-/Axiallager ausgebildet ist.

Zwischen den beiden seitlichen Gummielementen sowie zwischen der Außenhülse (3) und der Innenhülse (4) ist ein radialer Endanschlag (7) vorgesehen, der bei komprimierten Gummielementen (5) dadurch wirksam wird, daß die Außenhülse (3) in eine direkte Anlage an die Innenhülse (4) gelangt. Die Innenhülse (4) ist zusammen mit den Gummielementen so ausgeführt, daß die axial außenliegenden Teile der Innenhülse, bezogen auf den axial dazwischenliegenden Teil, einen kleineren Außendurchmesser aufweisen. Der Durchmesser des außenliegenden Teils ist so gewählt, daß der radial zur Außenhülse (3) verbleibende Abstand geringfügig größer ist als die im Fahrbetrieb maximale radiale Auslenkung der Innenhülse (4), bezogen auf die Außenhülse (3).

Im Fahrbetrieb werden die auftretenden Kräfte mithin von der Innenhülse (4) über die Gummielemente auf die Außenhülse (3) übertragen. Dadurch ist eine Geräusch- und Schwingungsisolierung von der Innenhülse (4) zur Außenhülse (3) und dadurch vom Fahrgestell zum Fahrerhaus (2) möglich.

Beim Kippen des Fahrerhauses kommen infolge der dann größeren Lagerkräfte die radial äußeren Umfangsteile der Innenhülse (4) an der Außenhülse (3) zur Anlage. Die von den Gummielementen zu übertragenden Kräfte werden dadurch auf die dieser Auslenkung entsprechenden Kräfte beschränkt. Der darüber hinausgehende Anteil der Lagerkraft wird direkt von den radial außenliegenden Teilen der Innenhülse (4) unter Umgehung der Gummielemente auf die Außenhülse (3) übertragen.

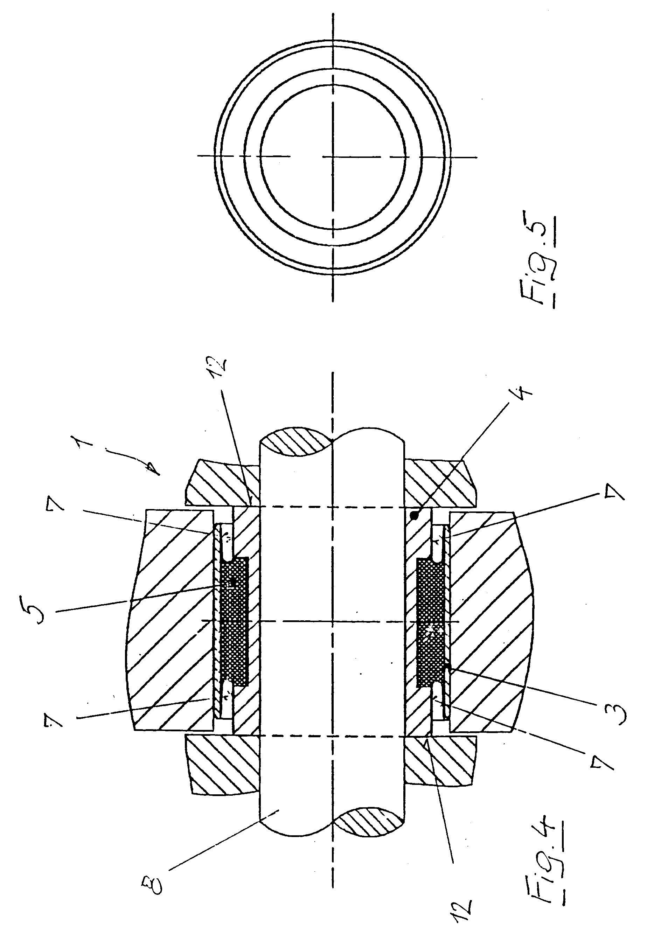

Das in den Fig. 4 und 5 gezeigte Ausführungsbeispiel eines Gummilagers (1) entspricht im Grundsatz demjenigen nach den Fig. 2 und 3. In Abänderung ist hier jedoch ein zentrales Gummielement vorgesehen, welches an zentraler Stelle der Innenhülse (4) in einer radialen Umfangsaussparung fest haftend eingelassen bzw. einvulkanisiert ist. Bei dieser Ausführungsvariante sind nunmehr an axial äußeren Stellen auf beiden Seiten des Gummielementes (5) radiale Endanschläge (7) vorgesehen, die bei einem Kippen des Fahrerhauses wirksam werden. Die beiden radialen Endanschläge (7) der letztgenannten Ausführungsvariante eines Gummilagers (1) entlasten zuverlässig das Gummielement (5) bei gekipptem Fahrerhaus.

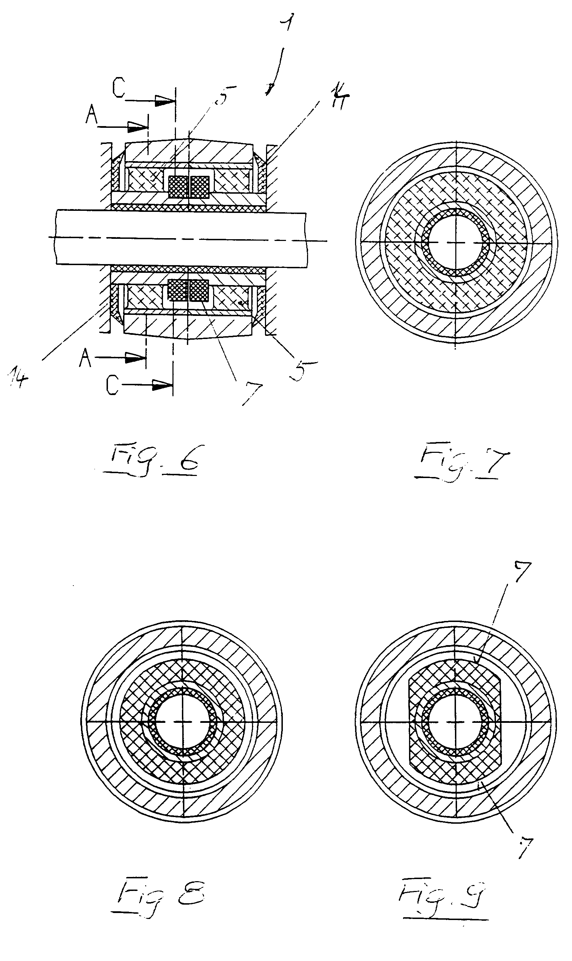

Das in den Fig. 6, 7 und 8 gezeigte Ausführungsbeispiel eines Gummilagers (1) entspricht demjenigen nach den Fig.2 und 3. In Abänderung ist hier jedoch ein in Axialrichtung zweigeteilter zentraler Endanschlag (7) zwischen zwei axial äußeren Gummielementen (5) vorgesehen. Der zweigeteilte zentrale Endanschlag (7) ist als diskretes Bauteil ausgebildet. Ferner sind an den axialen Enden des Lagers Dichtringe (14) mit einer radial äußeren Umfangsdichtlippe vorgesehen. Der zweigeteilte zentrale Endanschlag (7) ist, wie dies insbesondere der Fig. 8 zu entnehmen ist, über dem gesamten Umfang mit gleichbleibender Dicke vorgesehen.

Die Ausführungsvariante nach Fig. 9 unterscheidet sich von derjenigen nach Fig. 8 dahingehend, daß der Endanschlag (7) nur in der vertikalen Hauptbelastungsrichtung ausgebildet ist. In horizontaler Richtung sind größere Federwege mit weicherer Lagercharakteristik möglich.

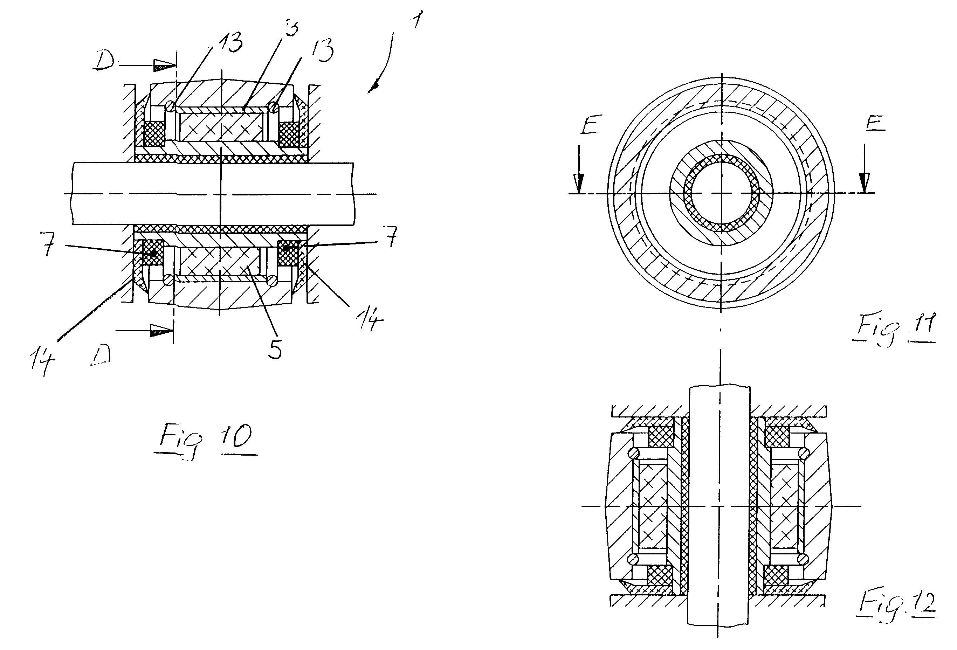

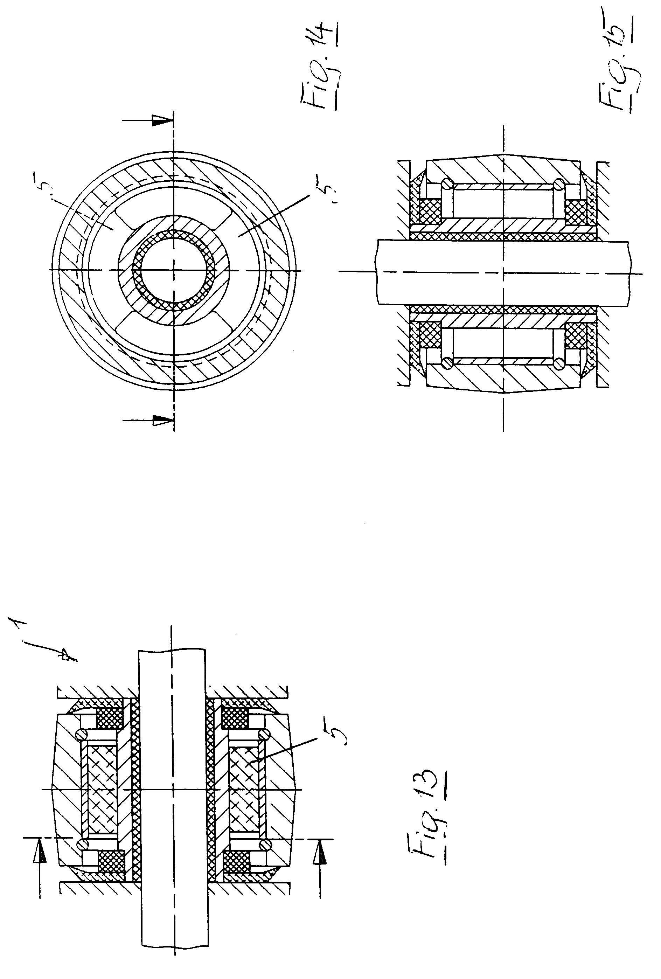

Das in Fig. 10, 11 und 12 ferner veranschaulichte Ausführungsbeispiel entspricht in etwa demjenigen nach den Fig.4 und 5, da ein zentrales Gummielement (5) und zwei axial äußere Endanschläge (7) vorgesehen sind. In Abänderung jedoch sind axiale Sicherungsringe (13) vorgesehen, welche die Außenhülse (3) im Aufnahmeauge sichern. Im übrigen sind auch hier axial äußere Dichtringe (14) mit radial äußeren Umfangsdichtlippen vorgesehen, wie dies auch beim Ausführungsbeispiel nach Fig. 6 der Fall ist.

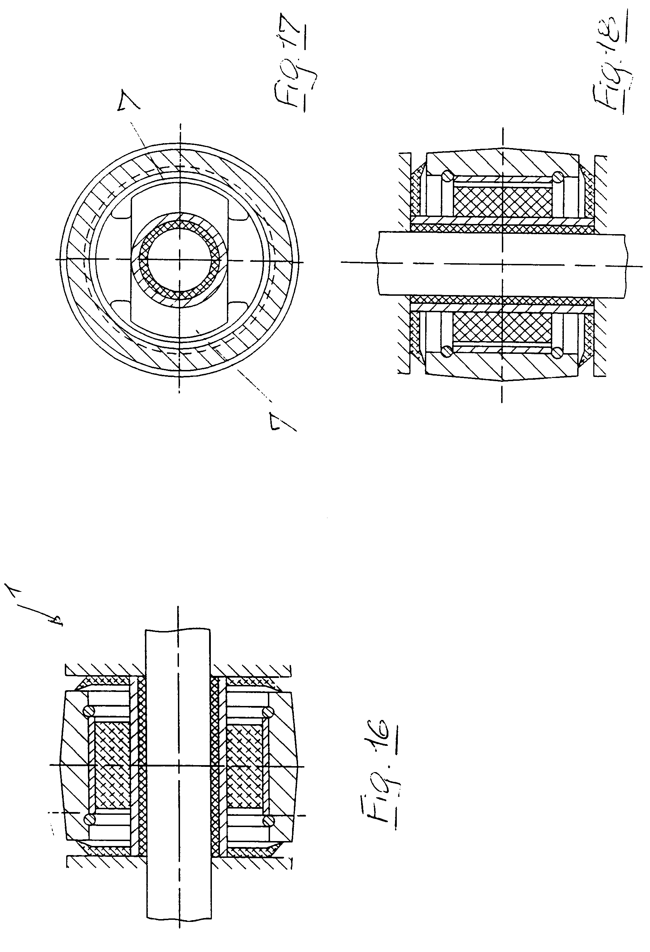

Die Ausführungsvariante nach den Fig. 13, 14 und 15 entspricht in etwa derjenigen nach den Fig. 10, 11 und 12. Jedoch ist hier das zentrale Gummielement (5) nicht umlaufend, sondern nur in vertikaler Hauptbelastungsrichtung ausgebildet, wie dies insbesondere der Fig. 14 zu entnehmen ist. Das Lager wird dadurch in horizontaler Richtung weicher. Auch ergibt sich eine bessere Entkopplung von Fahrgestellschwingungen. Die Endanschläge sind als umlaufende Ringe ausgebildet.

Das in den Fig. 16, 17 und 18 gezeigte Ausführungsbeispiel ähnelt im Grundsatz demjenigen nach den Fig. 13, 14 und 15. Jedoch sind die Endanschläge (7) nur in horizontaler Richtung vorgesehen, wie dies insbesondere der Fig. 17 zu entnehmen ist. Die Beweglichkeit des Lagers wird nur in horizontaler Richtung durch die Endanschläge eingeschränkt.

## Patentansprüche

1. Gummilager (1) für die Lagerung des Fahrerhauses (2) eines Nutzfahrzeuges zur Anordnung zwischen einem Aufnahmeauge (11) des Fahrzeugrahmens (6) und einem Lagerbolzen (8) des kippbaren Fahrerhauses, mit einer Außen- und Innenhülse (3,4), zwischen denen ein Gummielement (5) fest angebracht ist, dadurch **gekennzeichnet**, daß zwischen Außenhülse (3) und Innenhülse (4) ein radialer Endanschlag (7) vorgesehen ist, derart, daß die Außenhülse (3) durch Komprimieren des Gummielements (5) in direkte Anlage an die Innenhülse (4) bringbar ist, und daß die Innenhülse (4) als Radial-Gleitlager mit innerer ringförmiger Gleitfläche ausgebildet ist, in welchem der Lagerbolzen (8) des kippbaren Fahrerhauses (2) bzw. einer drehbaren Schwinge (9) des kippbaren Fahrerhauses (2), an der sich die eigentliche Fahrerhausfeder (10) des Fahrerhauses (2) abstützt, gleitend aufgenommen ist.

2. Gummilager nach Anspruch 1,
dadurch gekennzeichnet,
daß die Außenhülse (3) in das Aufnahmeauge (11) des Fahrzeugrahmens (6) bzw. des Fahrerhauses (2) eingepreßt und/oder im Aufnahmeauge durch axiale Sicherungsringe (13) gesichert ist.

3. Gummilager nach Anspruch 2,
dadurch gekennzeichnet,
daß das Gummielement (5) zwischen Innenhülse (4) und Außenhülse (3) fest haftend einvulkanisiert oder eingepreßt ist.

4. Gummilager nach einem der Ansprüche 1 bis 3,
dadurch gekennzeichnet,
daß die Innenhülse als kombiniertes Axial-/Radiallager mit radialer Gleitfläche (12) ausgebildet ist, in welchem der Lagerbolzen (8) drehbar mit Axialfixierung aufgenommen ist.

5. Gummilager nach einem der Ansprüche 1 bis 4,
dadurch gekennzeichnet,
daß die Außenhülse (3) ringförmig ausgebildet ist.

6. Gummilager nach einem der Ansprüche 1 bis 5,
dadurch gekennzeichnet,
daß die Innenhülse (4) abgesetzt ausgebildet ist und zumindest eine Umfangsaussparung an radial äußerer Stelle besitzt, in welcher ein radial innerer Umfangsteil des Gummielementes (5) in einem formschlüssigen Preßeingriff oder fest einvulkanisiert aufgenommen ist.

7. Gummilager nach einem der Ansprüche 1 bis 6,
dadurch gekennzeichnet,
daß die Außen- und Innenhülse (3 bzw. 4) Kunststoff-Formteile sind, wobei der radiale Endanschlag (7) zwischen den Formteilen eine Federcharakteristik besitzt.

8. Gummilager nach einem der Ansprüche 1 bis 7,
dadurch gekennzeichnet,
daß ein einziges zentrales Gummielement (5) zwischen zwei axial äußeren Endanschlägen (7) vorgesehen ist (Fig.4 und 5).

9. Gummilager nach einem der Ansprüche 1 bis 7,
dadurch gekennzeichnet,
daß ein zentraler oder ein axial zweigeteilter Endanschlag (7) zwischen zwei axial äußeren Gummielementen (5) vorgesehen ist (Fig. 2, 3 bzw. Fig. 6).

10. Gummilager nach einem der Ansprüche 1 bis 9,
dadurch gekennzeichnet,
daß der Endanschlag (7) längs eines Außenumfangs der Innenhülse (4) und längs eines Innenumfangs der Außenhülse (3) integriert ausgebildet ist, wobei sich im Eingriffsfalle Außen- und Innenhülse (3 bzw. 4) zumindest längs einer Mantellinie berühren.

11. Gummilager nach einem der Ansprüche 1 bis 10,
dadurch gekennzeichnet,
daß die Außenhülse (3) in axialer Längsrichtung geschlitzt ausgebildet ist.

12. Gummilager nach einem der Ansprüche 1 bis 11,
dadurch gekennzeichnet,
daß der Endanschlag (7) nur in einer Belastungsrichtung, insbesondere vertikal oder horizontal, vorgesehen ist (Fig.9 bzw. Fig. 17).

13. Gummilager nach einem der Ansprüche 1 bis 12,
dadurch gekennzeichnet,
daß das Gummielement (5) nur in vertikaler Hauptbelastungsrichtung vorgesehen ist (Fig. 13, 14, 15).

## Claims

1. A rubber bearing for mounting a driver's cab (2) of a commercial vehicle for arrangement between a seating eye (11) of the vehicle chassis (6) and a bearing pin (8) of the tilting driver's cab, with an outer sleeve and inner sleeve (3,4), between which a rubber element (5) is securely fitted, characterized in that a radial end stop (7) is provided between the outer sleeve (3) and the inner sleeve (4) so that by compression of the rubber element (5) the outer sleeve (3) can be brought into direct abutment against the inner sleeve (4), and in that the inner sleeve (4) is in the form of radial sliding bearing with inner annular sliding surface, in which is slidably accommodated the bearing pin (8) of the tilting driver's cab (2) or a rotatable rocker arm (9) of the tilting driver's cab (2), against which bears the actual driver's cab spring (10) of the driver's cab (2).

2. A rubber bearing according to Claim 1, characterized in that the outer sleeve (3) is pressed into the seating eye (11) of the vehicle chassis (6) or of the driver's cab (2) and/or is secured in the seating eye (11) by axial retaining rings (13).

3. A rubber bearing according to Claim 2, characterised in that the rubber element (5) is pressed in or is vulcanised between the inner sleeve (4) and the outer sleeve (3) so as to adhere securely.

4. A rubber bearing according to any one of Claims 1 to 3, characterised in that the inner sleeve (4) is in the form of a combined axial/radial bearing with radial sliding surface (12), in which the bearing pin (8) is accommodated rotatably with axial location.

5. A rubber bearing according to any one of Claims 1 to 4, characterised in that the outer sleeve (3) is of annular shape.

6. A rubber bearing according to any one of Claims 1 to 5, characterised in that the inner sleeve (4) is stepped and has at least one peripheral recess at a radially outer location, in which a radially inner peripheral part of the rubber element (5) is accommodated in a form-locking pressing engagement or is securely vulcanised therein.

7. A rubber bearing according to any one of Claims 1 to 6, characterised in that the outer sleeve and inner sleeve (3 and 4) are moulded plastics parts, wherein the radial end stop (7) between the moulded parts has a spring characteristic.

8. A rubber bearing according to any one of Claims 1 to 7, characterised in that a single central rubber element (5) is provided between two axially outer end stops (7) (Figures 4 and 5).

9. A rubber bearing according to any one of Claims 1 to 7, characterised in that a central or axially split end stop (7) is provided between two axially outer rubber elements (5) (Figures 2, 3 and Figure 6).

10. A rubber bearing according to any one of Claims 1 to 9, characterised in that the end stop (7) is formed integrally along an outer periphery of the inner sleeve (4) and along an inner periphery of the outer sleeve (3), wherein in the event of engagement the outer sleeve and inner sleeve (3 and 4) contact at least along a circumferential line.

11. A rubber bearing according to any one of Claims 1 to 10, characterised in that the outer sleeve (3) is formed slotted in axial longitudinal direction.

12. A rubber bearing according to any one of Claims 1 to 11, characterised in that the end stop (7) is provided only in one loading direction, in particular vertically or horizontally (Figure 9 or Figure 17).

13. A rubber bearing according to any one of Claims 1 to 12, characterised in that the rubber element (5) is provided only in vertical principal loading direction (Figures 13, 14, 15).

## Revendications

1. Palier en caoutchouc (1) pour le support d'une cabine (2) d'un véhicule utilitaire, destiné à être monté entre un oeillet de réception (11) du châssis (6) du véhicule et un goujon de palier (8) de la cabine basculante, comprenant un manchon extérieur et un manchon intérieur (3, 4) entre lesquels est monté solidairement un élément en caoutchouc (5), caractérisé en ce qu'entre le manchon extérieur (3) et le manchon intérieur (4) il est prévu une butée de fin de course (7), radiale, de façon que le manchon extérieur (3) puisse être conduit par compression de l'élément en caoutchouc (5) en appui direct contre le manchon intérieur (4) et en ce que le manchon intérieur (4) est réalisé comme palier de glissement radial avec une surface de glissement annulaire intérieure dans laquelle le goujon de palier (8) de la cabine basculante (2) ou d'une branche (9) pivotante de la cabine basculante (3) soit reçu en glissement, branche contre laquelle s'appuie le ressort (10) proprement dit de la cabine (2).

2. Palier en caoutchouc selon la revendication 1, caractérisé en ce que le manchon extérieur (3) est pressé dans l'oeillet de réception (11) du châssis (6) ou de la cabine (2) et/ou est fixé dans l'oeillet par des anneaux de blocage (13), axiaux.

3. Palier en caoutchouc selon la revendication 2, caractérisé en ce que l'élément en caoutchouc (5) est vulcanisé ou est pressé de manière à s'accrocher solidairement entre le manchon intérieur (4) et le manchon extérieur (3).

4. Palier en caoutchouc selon l'une des revendications 1 à 3, caractérisé en ce que le manchon intérieur est un palier axial/radial combiné avec des surfaces de glissement (12), radiales, recevant le goujon de palier (8), de manière rotative mais bloquée axialement.

5. Palier en caoutchouc selon l'une des revendications 1 à 4, caractérisée en ce que le manchon extérieur (3) est de forme annulaire.

6. Palier en caoutchouc selon l'une des revendications 1 à 5, caractérisé en ce que le manchon intérieur (4) est décalé et possède au moins une cavité périphérique à un point radialement à l'extérieur, dans lequel est logé une partie périphérique radialement intérieure de l'élément en caoutchouc (5), suivant un siège pressé avec liaison de forme, ou est vulcanisé solidairement.

7. Palier en caoutchouc selon l'une des revendications 1 à 6, caractérisé en ce que le manchon extérieur et le manchon intérieur (3, 4) sont des pièces moulées en matière plastique, la butée de fin de course (7), radiale, ayant une caractéristique de ressort entre les pièces moulées.

8. Palier en caoutchouc selon l'une des revendications 1 à 7, caractérisé en ce qu'un seul élément en caoutchouc (5), central, est prévu entre deux butées de fin de course (7) axialement extérieures (figures 4 et 5).

9. Palier en caoutchouc selon l'une des revendications 1 à 7, caractérisé en ce qu'une butée de fin de course (7) centrale ou divisée axialement en deux parties est prévue entre deux éléments en caoutchouc (5) axialement extérieurs (figures 2, 3 ou figure 6).

10. Palier en caoutchouc selon l'une des revendications 1 à 9, caractérisé en ce que la butée de fin de course (7) est réalisée de manière intégrée le long d'une périphérie extérieure du manchon intérieur (4) ou le long d'une périphérie intérieure du manchon extérieure (3), et en cas de prise le manchon extérieur (3) et le manchon intérieur (4) se touchent au moins le long d'une génératrice.

11. Palier en caoutchouc selon l'une des revendications 1 à 10, caractérisé en ce que le manchon extérieur (3) est fendu dans la direction axiale longitudinale.

12. Palier en caoutchouc selon l'une des revendications 1 à 11, caractérisé en ce que la butée de fin de course (7) est prévue seulement dans une direction de charge et en particulier dans la direction horizontale ou la direction verticale (figure 9 ou figure 17).

13. Palier en caoutchouc selon l'une des revendications 1 à 12, caractérisé en ce que l'élément en caoutchouc (5) n'est prévu que dans la direction verticale de la charge principale (figures 13, 14, 15).
